# EUROPEAN PATENT APPLICATION

(11) **EP 4 481 944 A1**
(43) Date of publication of application: **25.12.2024**
(21) Application number: 23781253.2
(22) Date of filing: 24.03.2023
(51) Int. Cl.: H01Q 1/38, H01Q 1/24, H05K 9/00, H04M 1/02, G09F 9/30, G06F 1/16

(54) **ELECTRONIC APPARATUS INCLUDING ANTENNA**

(30) Priority: 28.03.2022 KR 20220038406; 17.05.2022 KR 20220060015
(71) Applicant: Samsung Electronics Co., Ltd., Gyeonggi-do, 16677 (KR)
(72) Inventor: SEOL, Kyungmoon, Suwon-si, Gyeonggi-do 16677 (KR); KIM, Yoonjung, Suwon-si, Gyeonggi-do 16677 (KR); KIM, Jiho, Suwon-si, Gyeonggi-do 16677 (KR); AN, Seongyong, Suwon-si, Gyeonggi-do 16677 (KR); LEE, Minkyung, Suwon-si, Gyeonggi-do 16677 (KR); JANG, Kyihyun, Suwon-si, Gyeonggi-do 16677 (KR); HWANG, Hochul, Suwon-si, Gyeonggi-do 16677 (KR)
(74) Representative: HGF
(86) International application number: PCT/KR2023/003945
(87) International publication number: WO 2023/191397

(57) **Abstract**

An electronic apparatus according to various embodiments of the present invention comprises: a first housing including a first space; a second housing slidably coupled to the first housing and including a second space; a flexible display which is disposed so as to be supported by the first housing and the second housing, and the display area of which partially changes when the flexible display is converted from a slide-in state to a slide-out state; a first substrate disposed in the first space of the first housing; a second substrate disposed on a first surface of the second housing and including a first antenna pattern; a wireless communication circuit disposed on one of the first substrate or the second substrate and electrically connected to the first antenna pattern; and a hole formed in a portion of the second housing. The first antenna pattern may be disposed overlapping the hole. Various other embodiments are possible.

## Description

### [Technical Field]

Various embodiments of the present invention relate to an electronic device including at least one antenna.

### [Background Art]

An electronic device such as bar-type, foldable-type, sliding-type or rollable-type are increasingly being used, and various functions are being provided in the electronic device.

The electronic device may include a flexible display that expands in correspondence to a slide-out state of a housing to provide a wider screen to a user.

The electronic device may include at least one antenna (e.g., an antenna pattern) for transmitting and receiving telephone calls and various data with other electronic device through wireless communication.

### [Disclosure of Invention]

### [Technical Problem]

An electronic device may include a slidable electronic device (e.g., a rollable electronic device) in which a display area of a flexible display may be expanded.

The slidable electronic device may include a first housing and a second housing moveably coupled relative to each other.

The slidable electronic device, wherein the first housing and the second housing are slidably coupled relative to each other in such a way that they at least partially fit together, and may support at least a portion of a flexible display (flexible display or expandable display). For example, the second housing may be fixed, and the first housing may be slid in the second housing or slid out to the outside of the second housing.

When the first housing is in a slide-in state inside the second housing, the flexible display may be contracted, and when the first housing is in a slide-out state outside the second housing, the flexible display may be expanded. The flexible display may be disposed partially bendable on an inner surface of the second housing.

In the slidable electronic device, a second substrate may be disposed in the second housing, and an antenna (e.g., an antenna pattern) may be disposed on the second substrate.

When the antenna is disposed adjacent to the ground having a conductive material, such as, for example, the second housing or flexible display, the radiation performance of the antenna may be degraded.

When the radiation performance of the antenna is degraded, the electronic device may not normally perform telephone calls and/or data transmission and reception with other electronic device.

Various embodiments of the present invention may provide an electronic device capable of improving radiation performance of an antenna by forming a hole in a portion of a second housing disposed between an antenna disposed in a second substrate (e.g., a PCB embedded antenna) and a flexible display.

Technical problems to be solved by the present disclosure are not limited to the above-mentioned technical problems, and other technical problems, which are not mentioned above, may be clearly understood from the following descriptions by those skilled in the art to which the present invention pertains.

### [Solution to Problem]

An electronic device, according to various embodiments of the present invention, may include a first housing including a first space, a second housing slidably coupled to the first housing and including a second space, a flexible display disposed to be supported by the first housing and the second housing, and having a display area that partially changes when the flexible display is converted from a slide-in state to a slide-out state, a first substrate disposed in the first space of the first housing; a second substrate disposed on a first surface of the second housing and including a first antenna pattern, a wireless communication circuit disposed on one of the first substrate or the second substrate and electrically connected to the first antenna pattern, and a hole formed in a portion of the second housing. The first antenna pattern may be disposed to overlap the hole.

An electronic device, according to an embodiment of the present invention, may include a first housing including a first space, a second housing slidably coupled to the first housing and including a second space, a flexible display disposed to be supported by the first housing and the second housing, and having a display area that partially changes when the flexible display is converted from a slide-in state to a slide-out state, a first substrate disposed in the first space of the first housing, a second substrate disposed on a first surface of the second housing and including a first antenna pattern, a wireless communication circuit disposed on one of the first substrate or the second substrate and electrically connected to the first antenna pattern, and a hole formed in a portion of the second housing. The second substrate may be disposed to face a portion of the flexible display through the hole in a state in which the first housing is slid into the second space of the second housing, and not to face a portion of the flexible display through the hole in a state in which the first housing is slid out from the second space of the second housing.

### [Advantageous Effects of invention]

According to various embodiments of the present invention, there is provided an electronic device can improve radiation performance of an antenna by forming a hole in a portion of a second housing disposed between an antenna (e.g., an antenna pattern) formed on a second substrate and a flexible display, and by ensuring a spacing space between the antenna, the second housing and/or the flexible display.

In addition, various effects that can be directly or indirectly identified through the present document may be provided.

### [Brief Description of Drawings]

In connection with the description of the drawings, the same or similar reference numerals may be used for the same or similar components.
FIG. 1 is a block diagram of an electronic device in a network environment according to various embodiments of the present invention.
FIGS. 2A and 2B are views illustrating a front surface and a rear surface of an electronic device in a slide-in state, according to various embodiments of the present invention.
FIGS. 3A and 3B are views illustrating a front surface and a rear surface of an electronic device in a slide-out state, according to various embodiments of the present invention.
FIG. 4 is an exploded perspective view of an electronic device according to various embodiments of the present invention.
FIG. 5A is a schematic cross-sectional view viewed along line 5a-5a of the electronic device disclosed in FIG. 2A, according to various embodiments of the present invention.
FIG. 5B is a schematic cross-sectional view viewed along line 5b-5b of the electronic device disclosed in FIG. 3A, according to various embodiments of the present invention.
FIG. 6A is an exploded perspective view schematically illustrating a portion of an electronic device according to various embodiments of the present invention.
FIG. 6B is a view schematically illustrating a state in which a second housing and a second substrate are coupled in the electronic device in FIG. 6A, according to various embodiments of the present invention.
FIG. 6C is a schematic cross-sectional view viewed along line 6c-6c in the electronic device in FIG. 6B, according to various embodiments of the present invention.
FIG. 6D is an enlarged view schematically illustrating an embodiment of an E portion of the electronic device in FIG. 6C, according to various embodiments of the present invention.
FIG. 7 is an enlarged view schematically illustrating another embodiment of an E portion of the electronic device in FIG. 6C, according to various embodiments of the present invention.
FIG. 8 is a view illustrating radiation efficiency for a first antenna pattern of an electronic device according to various embodiments of the present invention, and for an antenna pattern of an electronic device according to a comparative embodiment.
FIG. 9A is a schematic cross-sectional view of an embodiment viewed along line 6c-6c when the electronic device in FIG. 6B is in a slide-in state, according to various embodiments of the present invention.
FIG. 9B is a schematic cross-sectional view of an embodiment viewed along line 6c-6c when the electronic device in FIG. 6B is in a slide-out state, according to various embodiments of the present invention.
FIG. 10A is a schematic cross-sectional view of various embodiments viewed along line 6c-6c when the electronic device in FIG. 6B is in a slide-in state, according to various embodiments of the present invention.
FIG. 10B is a schematic cross-sectional view of various embodiments viewed along line 6c-6c when the electronic device in FIG. 6B is in a slide-out state, according to various embodiments of the present invention.
FIG. 10C is an enlarged view schematically illustrating various embodiments of an F portion of the electronic device in FIG. 10A, according to various embodiments of the present invention.
FIG. 11 is a view illustrating return loss when the electronic device in FIG. 10A is in a slide-in state and when the electronic device in FIG. 10B is in a slide-out state, according to various embodiments of the present invention.
FIG. 12 is a view illustrating radiation efficiency for a first antenna pattern when a hole formed in a second housing of an electronic device according to various embodiments of the present invention is filled with air, when a shielding member is disposed in a hole, and for an antenna pattern of an electronic device according to a comparative embodiment.

### [Mode for the Invention]

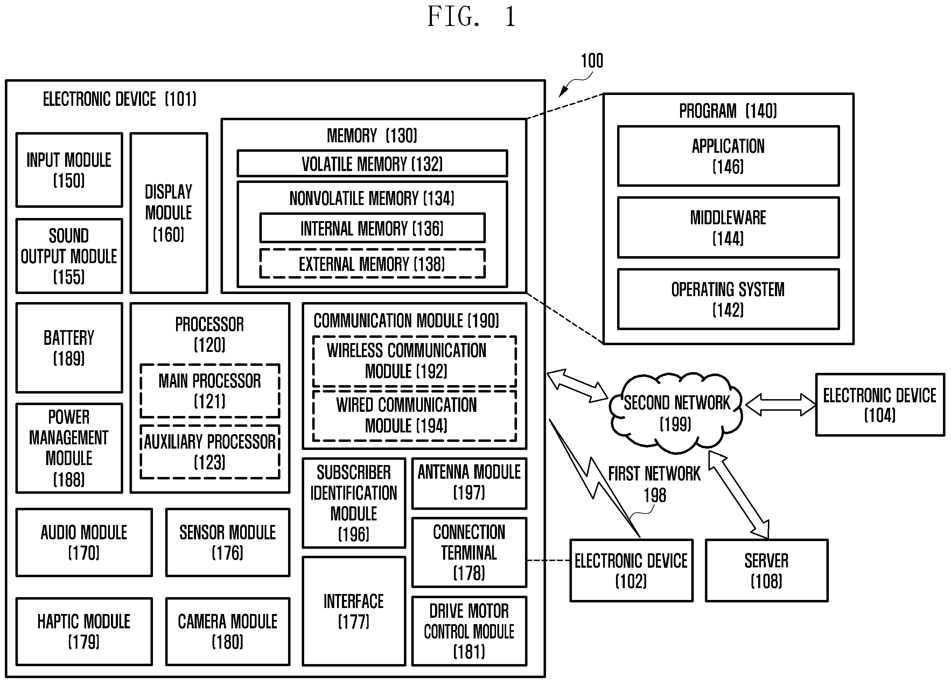

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

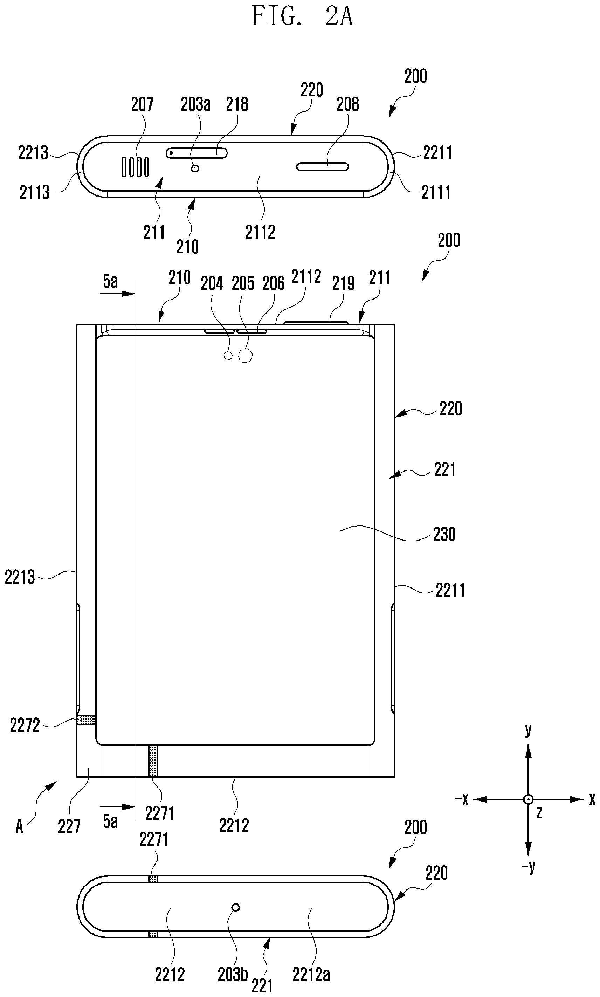

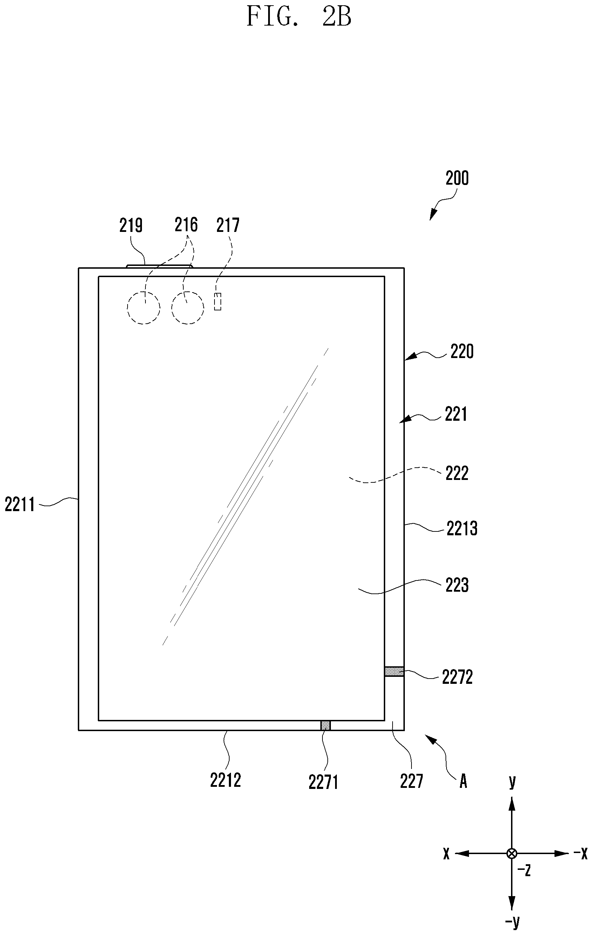

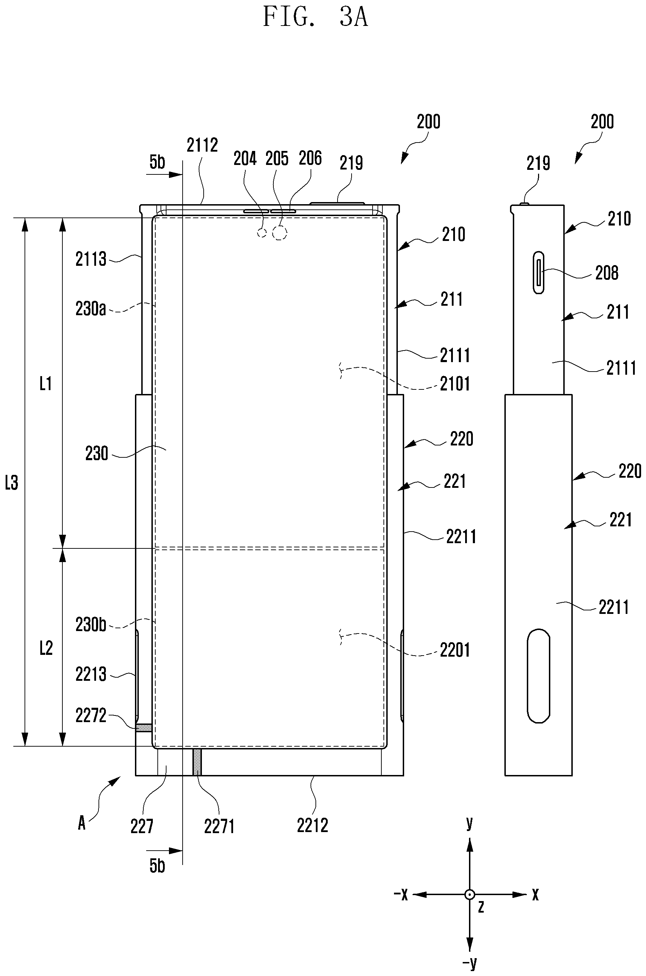

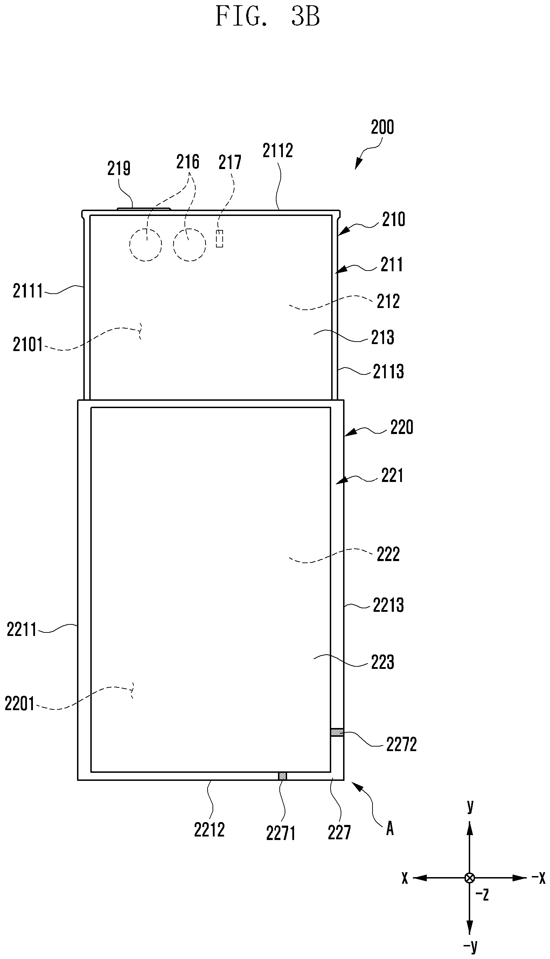

FIGS. 2A and 2B are views illustrating a front surface and a rear surface of an electronic device in a slide-in state, according to various embodiments of the present invention. FIGS. 3A and 3B are views illustrating a front surface and a rear surface of an electronic device in a slide-out state, according to various embodiments of the present invention.

An electronic device 200 in FIGS. 2A to 3B may be at least partially similar to the electronic device 101 in FIG. 1, or may include other embodiments. The electronic device 200 in FIGS. 2A to 3B may include a rollable type of electronic device or a sliding type of electronic device.

With reference to FIGS. 2A to 3B, the electronic device 200 may include a first housing 210 (e.g., a first housing structure, a moving part, or a slidable housing); a second housing 220 (e.g., a second housing structure, a fixed part, or a base housing) slidably coupled to the first housing 210 in a designated direction (e.g., + y-axis direction or -y-axis direction), and a flexible display 230 disposed to be supported by at least a portion of the first housing 210 and the second housing 220. The flexible display 230 may include an expandable display or a stretchable display. The flexible display 230 may include the display module 160 disclosed in FIG. 1.

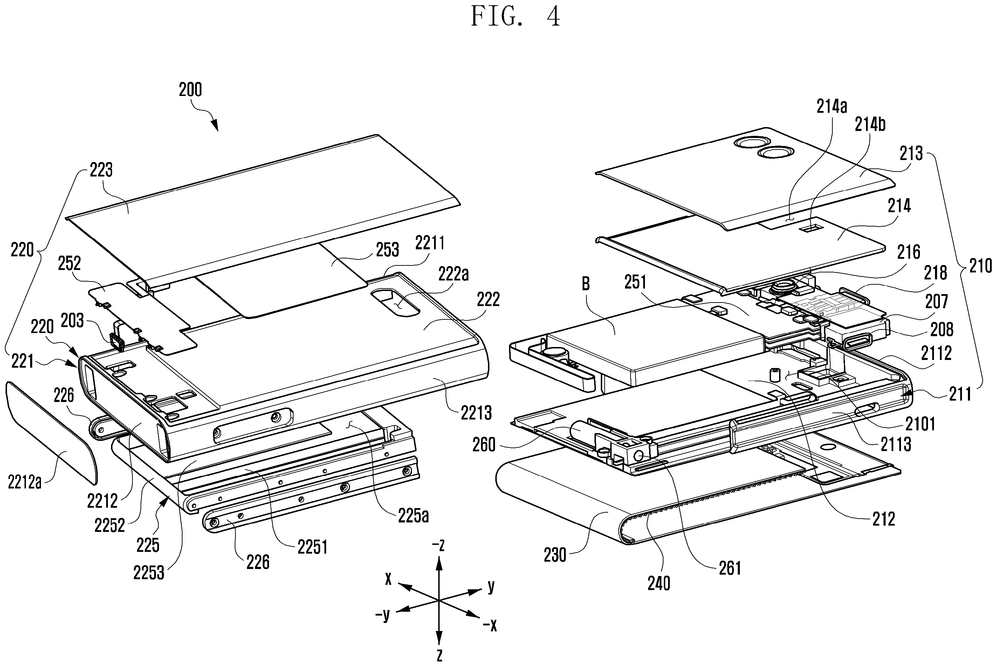

According to an embodiment, the electronic device 200 may be disposed such that the first housing 210 is slid out in a first direction (e.g., y-axis direction) or slid in in a second direction (e.g., -y-axis direction) opposite to the first direction (e.g., y-axis direction) relative to the second housing 220 gripped by a user. According to an embodiment, at least a portion of the first housing 210 including a first space 2101 is received in a second space 2201 of the second housing 220, thereby changing to a slide-in state (e.g., a first state). According to an embodiment, the electronic device 200 may include a bendable member (or a bendable support member) (e.g., a bendable member 240 in FIG. 4) (e.g., an articulated hinge module or a multi-bar assembly) that defines at least partially co-planar with at least a portion of the first housing 210 in a slide-out state and is at least partially received in the second space 2201 of the second housing 220 in a slide-in state.

According to an embodiment, in a slide-in state, at least a portion of the flexible display 230 may be disposed not to be visible from the outside by being received in an internal space 2201 of the second housing 220 while being supported by a bendable member (e.g., the bendable member 240 in FIG. 4). At least a portion of the flexible display 230 may be disposed to be visible from the outside while being supported by a bendable member (e.g., the bendable member 240 in FIG. 4) that defines at least partially co-planar with the first housing 210 in a slide-out state.

According to various embodiments, the first housing 210 of the electronic device 200 may include a first lateral member 211 and the second housing 220 may include a second lateral member 221. The first lateral member 211 may include a first side surface 2111 having a first length along a first direction (e.g., y-axis direction), a second side surface 2112 extending from the first side surface 2111 to have a second length shorter than the first length along a direction (e.g., -x-axis direction) substantially perpendicular to the first side surface 2111, and a third side surface 2113 extending from the second side surface 2112 substantially in parallel with the first side surface 2111 and having the first length. The first lateral member 211 may be at least partially formed of a conductive material (e.g., metal). In some embodiments, the first lateral member 211 may be formed by bonding of a conductive material and a non-conductive material (e.g., a polymer).

According to an embodiment, the first housing 210 may include a first support member 212 extending from at least a portion of the first lateral member 211 to at least a portion of the first space 2101. In an embodiment, the first support member 212 may be formed integrally with the first lateral member 211. In some embodiments, the first support member 212 may be formed independently of the first lateral member 211 and structurally coupled to the first lateral member 211.

According to an embodiment, the second lateral member 221 may include a fourth side surface 2211 at least partially corresponding to the first side surface 2111 and having a third length, a fifth side surface 2212 extending from the fourth side surface 2211 in a direction substantially in parallel with the second side surface 2112 and having a fourth length shorter than the third length, and a sixth side surface 2213 extending from the fifth side surface 2212 in correspondence to the third side surface 2113 and having the third length. The second lateral member 221 may be at least partially formed of a conductive material (e.g., metal). In some embodiments, the second lateral member 221 may be formed by bonding of a conductive material and a non-conductive material (e.g., a polymer).

According to an embodiment, the second housing 220 may include a second support member 222 extending from at least a portion of the second lateral member 221 to at least a portion of the second space 2201. In an embodiment, the second support member 222 may be formed integrally with the second lateral member 221. In some embodiments, the second support member 222 may be formed independently of the second lateral member 221 and structurally coupled to the second lateral member 221.

According to an embodiment, the first side surface 2111 and the fourth side surface 2211 may be slidably coupled relative to each other. The third side surface 2113 and the sixth side surface 2213 may be slidably coupled relative to each other. When the electronic device 200 is in a slide-in state, the first side surface 2111 may be disposed not to be visible from the outside by overlapping the fourth side surface 2211. When the electronic device 200 is in a slide-in state, the third side surface 2113 may be disposed not to be visible from the outside by overlapping the sixth side surface 2213. In some embodiments, at least a portion of the first side surface 2111 and the third side surface 2113 may be disposed to be at least partially visible from the outside, in a slide-in state. When the electronic device 200 is in a slide-in state, at least a portion of the first support member 212 may overlap the second support member 222.

According to an embodiment, the first housing 210 may include a first rear surface cover 213 coupled to at least a portion of the first lateral member 211. The first rear surface cover 213 may be coupled to at least a portion of the first support member 212. In some embodiments, the first rear surface cover 213 may be formed integrally with the first lateral member 211. The first rear surface cover 213 may be formed of polymer, coated or colored glass, ceramic, metal (e.g., aluminum, stainless steel (STS), or magnesium), or combinations of the materials described above. In some embodiments, the first rear surface cover 213 may extend to at least a portion of the first lateral member 211. In some embodiments, the first rear surface cover 213 may be substituted for at least a portion of the first support member 212.

According to an embodiment, the second housing 220 may include a second rear surface cover 223 coupled to at least a portion of the second lateral member 221. The second rear surface cover 223 may be coupled to at least a portion of the second support member 222. In some embodiments, the second rear surface cover 223 may be formed integrally with the second lateral member 221. The second rear surface cover 223 may be formed of polymer, coated or colored glass, ceramic, metal (e.g., aluminum, stainless steel (STS), or magnesium), or combinations of the materials described above. In some embodiments, the second rear surface cover 223 may extend to at least a portion of the second lateral member 221. In some embodiments, the second rear surface cover 223 may be substituted for at least a portion of the second support member 222.

According to an embodiment, the electronic device 200 may include the flexible display 230 disposed to be supported by at least a portion of the first housing 210 and the second housing 220. The flexible display 230 may include a first portion 230a (e.g., a planar portion) exposed to the outside, and a second portion 230b (e.g., a bendable portion) extending from the first portion 230a and, in a slide-in state, at least partially received into a second space 2201 of the second housing 220 so that at least a portion of the second portion 230b is not visible from the outside. At least a portion of the first portion 230a may be disposed to be supported by the first housing 210, and the second portion 230b may be disposed to be supported at least partially by a bendable member (e.g., the bendable member 240 in FIG. 4). The second portion 230b of the flexible display 230 may be disposed to extend from the first portion 230a while being supported by a bendable member (e.g., the bendable member 240 in FIG. 4) in a state in which the first housing 210 is slid out along a first direction (e.g., y-axis direction), define substantially co-planar with the first portion 230a, and be exposed to the outside. The second portion 230b of the flexible display 230 may be disposed to be received in the second space 2201 of the second housing 220 and not exposed to the outside, in a state in which the second housing 220 is slid in along a second direction (e.g., -y-axis direction). In the electronic device 200, a display area of the flexible display 230 may change as the first housing 210 is moved from the second housing 220 in a sliding manner along a designated direction (e.g., ±y-axis direction).

According to an embodiment, the flexible display 230 may change in length in a first direction (e.g., y-axis direction) as the first housing 210 slides relative to the second housing 220. For example, with reference to FIG. 3A, the flexible display 230 may have a first display area (e.g., an area corresponding to the first portion 230a) that corresponds to a first length L1 in a slide-in state. The flexible display 230 may be expanded to have a third display area (e.g., an area including the first portion 230a and the second portion 230b) that corresponds to a third length L3 that is longer than the first length L1 and is greater than the first display area as the first housing 210 further slides by a second length L2 relative to the second housing 220, in a slide-out state.

According to an embodiment, the electronic device 200 may include at least one of an input device (e.g., a microphone 203a) disposed in the first space 2101 of the first housing 210, a sound output device (e.g., a receiver 206 for calls or a speaker 207), sensor modules 204 and 217, camera modules (e.g., a first camera module 205 or a second camera module 216), a connector port 208, a key input device 219, or an indicator (not illustrated). The electronic device 200 may include other input devices (e.g., a microphone 203a) disposed in the second housing 220. In another embodiment, the electronic device 200 may be configured to omit at least one of the above-mentioned constituent elements or further include other constituent elements. At least one of the above-mentioned constituent elements may also be disposed in the second space 2201 of the second housing 220.

According to an embodiment, the input device (e.g., a microphone 203a) may include a plurality of microphones disposed to detect a direction of sound. The sound output device (e.g., the sound output module 155 in FIG. 1) may include, for example, a receiver 206 for calls and/or a speaker 207. In an embodiment, the speaker 207 may correspond to the outside through at least one speaker hole formed in the first housing 210 at a position exposed to the outside (e.g., the second side surface 2112), regardless of a slide-in/slide-out state of the electronic device 200. The connector port 208 may correspond to the outside through a connector port hole formed in the first housing 210, in a slide-out state. In some embodiments, the connector port 208 may also correspond to the outside through an opening formed in the second housing 220 and formed to correspond to the connector port hole, in a slide-in state. In some embodiments, the receiver 206 for calls may include a speaker (e.g., a piezoelectric speaker) operating with a separate speaker hole being excluded.

According to an embodiment, the sensor modules 204 and 217 may generate electrical signals or data values corresponding to an internal operating state of the electronic device 200 or an external environment state. For example, the sensor module 204 and 217 may include a first sensor module 204 (e.g., a proximity sensor or an illuminance sensor) disposed on the front surface (e.g., z-axis direction) of the electronic device 200, and/or a second sensor module 217 (e.g., a heart rate monitoring (HRM) sensor) disposed on the rear surface (e.g., -z-axis direction) of the electronic device 200. The first sensor module 204 may be disposed underneath the flexible display 230, on the front surface of the electronic device 200. The first sensor module 204 and/or the second sensor module 217 may include at least one of a proximity sensor, an illuminance sensor, a time of flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biosensor, a temperature sensor, or a humidity sensor.

According to an embodiment, the camera modules may include a first camera module 205 disposed on the front surface (e.g., z-axis direction) of the electronic device 200, and a second camera module 216 disposed on the rear surface (e.g., -z-axis direction) of the electronic device 200. The electronic device 200 may also include a flash (not illustrated) positioned near the second camera module 216. The camera modules 205 and 216 may include one or a plurality of lenses, an image sensor, and/or an image signal processor. In an embodiment, the first camera module 205 may be disposed underneath the flexible display 230 and configured to take an image of a subject through a portion of an active area (e.g., a display area) of the flexible display 230.

According to an embodiment, the first camera module 205 of the camera modules and some sensor modules 204 of the sensor modules 204 and 217 may be disposed to detect an external environment through the flexible display 230. For example, the first camera module 205 or the sensor module 204 may be disposed to be brought into contact with an external environment through a transmissive area or a perforated opening formed in the flexible display 230, in the first space 2201 of the first housing 210. An area of the flexible display 230, which faces the first camera module 205, is a portion of a display area for displaying content and may be formed as a transmissive area having a designated transmittance. In an embodiment, the transmissive area may be formed to have a transmittance in the range of about 5 % to about 20 %. The transmissive area may include an area that overlaps an effective area (e.g., a viewing angle area) of the first camera module 205 through which light imaged with an image sensor to create an image passes. For example, the transmissive area of the flexible display 230 may include an area having a lower pixel arrangement density and/or wiring density than the surroundings. The transmissive area may be substituted for the above-mentioned opening. For example, the first camera module 205 may include a under display camera (UDC). In some embodiments, the sensor module 204 may be disposed not to visually exposed through the flexible display 230 and perform the function thereof in the internal space of the electronic device 200.

According to an embodiment, the electronic device 200 may include at least one antenna (e.g., an antenna pattern) electrically connected to a wireless communication circuit (e.g., the wireless communication module 192 in FIG. 1) disposed in a first substrate 251 of the first housing 210. The electronic device 200 may include an antenna A disposed through the second lateral member 221 of the second housing 210. For example, the antenna A may include a conductive portion 227 disposed on at least a portion of the fifth side surface 2212 and the sixth side surface 2213 of the second lateral member 221 and electrically segmented by one or more segmenting portions 2271 and 2272 made of a non-conductive material (e.g., polymer). In an embodiment, a wireless communication circuit (e.g., the wireless communication module 192 in FIG. 1) may be configured to transmit or receive a wireless signal in a designated frequency band (e.g., about 800M Hz to 6000 MHz) (e.g., a legacy band) through the conductive portion 227. In an embodiment, the electronic device 200 may include a side surface cover 2212a disposed on the fifth side surface 2212. In some embodiments, the antenna A may be formed on at least one side surface that includes a conductive portion of the second side surface 2112, the fourth side surface 2211, the fifth side surface 2212, or the sixth side surface 2213. In some embodiments, the electronic device 200 may further include at least one antenna module (e.g., a 5G antenna module or an antenna structure) disposed in the internal space (e.g., the first space 2101 or the second space 2201) to transmit or receive a wireless signal in a frequency band in the range of about 3G Hz to 100 GHz through another wireless communication circuit (e.g., the wireless communication module 192 in FIG. 1).

According to an embodiment, a slide-in/slide-out operation of the electronic device 200 may be automatically performed. For example, a slide-in/slide-out operation of the electronic device 200 may be performed by a drive motor (e.g., a drive motor 260 in FIG. 4) including a pinion gear (not illustrated) disposed in the first space 2101 of the first housing 210 and by a gearing operation of a rack gear (e.g., a rack gear 2251 in FIG. 4) disposed in the second space 2201 of the second housing 220 and engaged with the pinion gear. For example, in case that a triggering operation for changing a state from a slide-in state to a slide-out state or from a slide-out state to a slide-in state is detected, a processor (e.g., the processor 120 in FIG. 1) of the electronic device 200 may operate the drive motor (e.g., the drive motor 260 in FIG. 4) disposed inside the electronic device 200. In an embodiment, the triggering operation may include selecting (e.g., touching) an object displayed on the flexible display 230 or manipulation of a physical button (e.g., a key button) included in the electronic device 200.

The electronic device 200 according to exemplary embodiments of the present disclosure may provide an expanded sliding distance by being provided with a design structure in which the drive motor (e.g., the drive motor 260 in FIG. 4) is disposed at an end toward a slide-in direction (e.g., -y direction) (e.g., a lower end of the first housing 210 in a slide-in state) in the first space 2101 of the first housing 210, and the pinion gear of the drive motor 260 moves along the rack gear (e.g., the rack gear 2251 in FIG. 4) disposed in the second space 2201 of the second housing 220 (e.g., a structure in which the drive motor 260 is disposed at the lower end of the first housing 210 in a slide-in state). The electronic device 200 may provide a structure for efficient electrical connection with the drive motor 260 by including electronic components (e.g., the first substrate 251 or a batter B in FIG. 4) disposed in the first space 2101 of the first housing 210 together with the drive motor 260. In addition, the electronic device 200 includes a support structure disposed in the second space 2201 of the second housing 220 to support at least a portion of the flexible display 230 in a slide-out state, which makes it possible to improve operation reliability of the electronic device 200.

FIG. 4 is an exploded perspective view of an electronic device according to various embodiments of the present invention.

The electronic device 200 disclosed in FIG. 4 may include the electronic device 101 in FIG. 1 and/or the embodiments described in FIGS. 2A to 3B. In describing the electronic device 200 in FIG. 4, constituent elements that are substantially the same as the embodiments disclosed in FIGS. 1 to 3B are given the same reference numerals, and redundant descriptions thereof may be omitted. The configuration of the electronic device 101 in FIG. 1 and/or the electronic device 200 disclosed in FIGS. 2A to 3B may be applied in substantially the same way, or with some modifications, to the various embodiments described below.

With reference to FIG. 4, the electronic device 200 may include the first housing 210 including the first space 2101, the second housing 220 slidably coupled to the first housing 210 and including the second space (e.g., the second space 2201 in FIG. 3A), the bendable member 240 disposed in the second space 2201 to be at least partially rotatable, the flexible display 230 disposed to be supported by at least a portion of the bendable member 240 and the first housing 210, and/or a drive module configured to drive the first housing 210 in a direction (e.g., -y-axis direction) in which the first housing 210 is slid in and/or a direction (e.g., y-axis direction) in which the first housing 210 is slid out relative to the second housing 220. According to an embodiment, the first housing 210 may include the first lateral member 211 and the first rear surface cover 213 coupled to at least a portion of the first lateral member 211 (e.g., at least a portion of the first support member 212). According to an embodiment, the second housing 220 may include the second lateral member 221 and the second rear surface cover 223 coupled to at least a portion of the second lateral member 221 (e.g., at least a portion of the second support member 222). In an embodiment, the drive module may include the drive motor 260 disposed in the first space 2101 and including a pinion gear (not illustrated), and the rack gear 2251 disposed to be engaged with the pinion gear in the second space 2201. The drive module may further include a speed reduction module disposed to reduce a rotational speed and increase a driving force by being coupled to the drive motor 260. The drive motor 260 may be disposed to be supported by at least a portion of the first support member 212, in the first space 2101 of the first housing 210. The drive motor 260 may be fixed to an end (e.g., edge) of the first support member 212, in the first space 2101, in a slide-in direction (e.g., -y-axis direction).

According to an embodiment, the electronic device 200 may include a plurality of electronic components disposed in the first space 2101. The plurality of electronic components may include the first substrate 251 (e.g., main substrate), the camera module 216 disposed around the first substrate 251, a socket module 218 (e.g., SIM tray), the speaker 207, the connector port 208, and/or the battery B. The plurality of electronic components may be disposed around the first substrate 251 in the first space 2101 of the first housing 210, along with the drive motor 260, to enable efficient electrical connections. In an embodiment, the processor 120, memory 130, power management module 188, communication module 190, and/or antenna module 197 disclosed in FIG. 1 may be disposed on the first substrate 251.

According to an embodiment, the electronic device 200 may include a rear bracket 214 disposed to cover at least a portion of the plurality of electronic components between the first support member 212 and the first rear surface cover 213 of the first housing 210. The rear bracket 214 may be structurally coupled to at least a portion of the first support member 212. In some embodiments, the rear bracket 214 may be omitted. The rear bracket 214 may be disposed to cover the plurality of electronic components and support the first rear surface cover 213. The rear bracket 214 may include a notch area 214a or an opening 214b (e.g., a through hole) formed in an area corresponding to the camera module 216 and/or the sensor module (e.g., the sensor module 217 in FIG. 3B). According to an embodiment, the camera module 216 and/or sensor module 217 may be disposed to detect an external environment through the notch area 214a or the opening 214b. At least an area of the first rear surface cover 213 corresponding to the camera module 216 and/or the sensor module 217 may be formed transparent. In some embodiments, the camera module 216 and/or the sensor module 217 may be configured to operate only in case that the electronic device 200 is in a slide-out state.

According to an embodiment, the electronic device 200 may include a plate type of support bracket 225 (e.g., a display support bar (DSB) or a display support bar) disposed in the second space 2201 of the second housing 220 and slidably coupled to at least a portion of the first support member 212. The support bracket 225 may include an opening 225a having a designated size. The support bracket 225 may include a support part 2252 disposed at one end and having an outer surface formed in a curved shape to support a rear surface of the bendable member 240 that is bent while sliding. The support bracket 225 may include a support plate 2253 formed to support a rear surface of the bendable member 240 in a slide-out state by extending from at least a portion of the support part 2252 to at least a portion of the opening 225a. The support bracket 225 may include the rack gear 2251 fixed to traverse the opening 225a and have a length along a direction parallel to a sliding direction. In some embodiments, the rack gear 2251 may be integrally formed with the support bracket 225. The electronic device 200 may include a pair of guide rails 226 disposed on two opposite surfaces of the support bracket 225 to guide two opposite ends of the bendable member 240 in a sliding direction.

According to an embodiment, the second support member 222 of the second housing 220 may include an opening 222a (e.g., a through hole) disposed in an area corresponding to the camera module 216 and/or the sensor module 217 disposed in the first housing 210, when the electronic device 200 is in a slide-in state. The camera module 216 and/or the sensor module 217 may detect an external environment through the opening 222a formed in the second housing 220, when the electronic device 200 is in a slide-in state. In this case, at least an area of the second rear surface cover 223, corresponding to the camera module 216 and/or the sensor module 217, may be formed transparent. According to various embodiments, the second support member 222 disposed in the second housing 220 may be omitted, and the opening 222a may be formed on a first surface of the second housing 220 (e.g., -z-axis direction).

According to an embodiment, the electronic device 200 may include a second substrate 252 and/or an antenna member 253 disposed between the second support member 222 and the second rear surface cover 223 of the second housing 220. According to various embodiments, the second substrate 252 and/or the antenna member 253 may be disposed on at least a portion of the second support member 222. In an embodiment, the second substrate 252 and/or the antenna member 253 may be electrically connected to the first substrate 251 using at least one electrical connection member (e.g., a flexible printed circuit board (FPCB) or flexible RF cable (FRC)). In some embodiments, the antenna member 253 may be electrically connected to the first substrate 251 through the second substrate 252 by being electrically connected to the second substrate 252. According to various embodiments, when the second support member 222 is omitted, the second substrate 252 may be disposed between the second housing 220 and the second rear surface cover 223.

According to an embodiment, the first substrate 251 may include a wireless communication circuit (e.g., the wireless communication module 192 in FIG. 1). The second substrate 252 may include at least one antenna pattern formed closer to or on a first surface (e.g., -z-axis direction) and/or a second surface (e.g., z-axis direction). A wireless communication circuit disposed on the first substrate 251 may supply a feed signal to an antenna pattern formed on the second substrate 252. A wireless communication circuit may support an antenna pattern to transmit and/or receive a wireless signal.

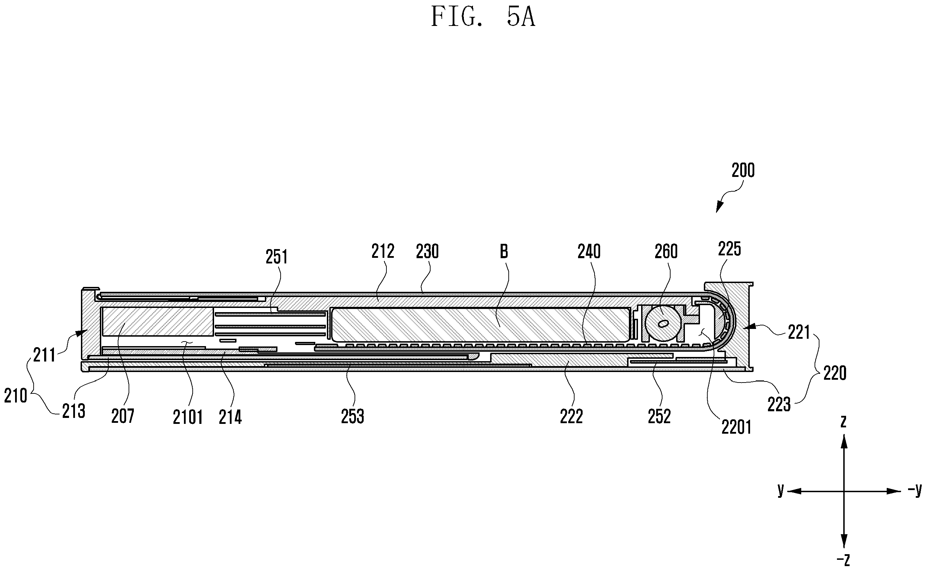

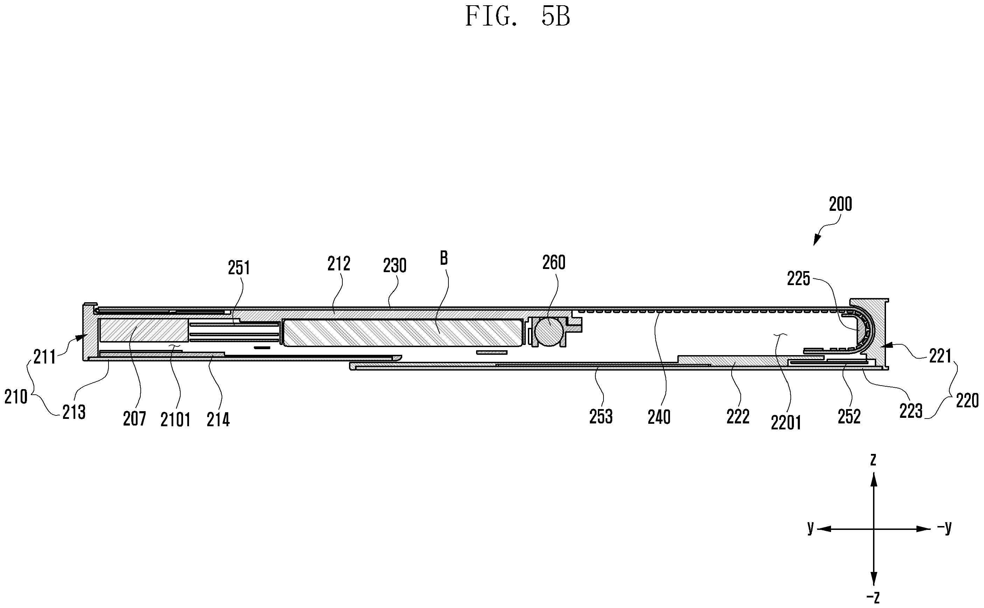

FIG. 5A is a schematic cross-sectional view viewed along line 5a-5a of the electronic device disclosed in FIG. 2A, according to various embodiments of the present invention. FIG. 5B is a schematic cross-sectional view viewed along line 5b-5b of the electronic device disclosed in FIG. 3A, according to various embodiments of the present invention.

In describing the electronic device 200 in FIGS. 5A and 5B, the constituent elements that are substantially identical to those in the electronic device 200 in FIG. 4 are assigned the same reference numerals, and a detailed description thereof may be omitted.

With reference to FIGS. 5A and 5B, the electronic device 200 may include the first housing 210 having the first space 2101, the second housing 220 having the second space 2201, the bendable member 240 connected to the first housing 210 and at least partially received in the second space 2201 in a slide-in state, the flexible display 230 disposed to be supported by at least a portion of the bendable member 240 and at least a portion of the first housing 210, and the drive motor 260 disposed in the first space 2101 and including a pinion gear engaged with a rack gear (the rack gear in FIG. 4) of the second space 2201. The drive motor 260 may automatically move the first housing 210 in a slide-in direction (e.g., -y-axis direction) or a slide-out direction (e.g., y-axis direction) relative to the second housing 220.

According to an embodiment, the first housing 210 may be at least partially received in the second space 2201 of the second housing 220 when the electronic device 200 is in a slide-in state. At least a portion of the flexible display 230 may be disposed not to be visible from the outside by being received into the second space 2201 with the bendable member 240. The flexible display 230 may have a first display area (e.g., the first portion 230a in FIG. 3A) exposed to the outside.

According to an embodiment, at least a portion of the first housing 210 may be converted to a slide-out state in which at least a portion of the first housing 210 is at least partially exposed to the outside of the second housing 220 along a first direction (e.g., y-axis direction), through driving of the drive motor 260. The flexible display 230 moves together with the bendable member 240 while being supported by the support bracket 225 when the electronic device 200 is in a slide-out state, so that a portion of the flexible display 230, which has slid in the second space 2201, may be at least partially exposed to the outside. The flexible display 230 may have an expanded second display area (e.g., the second portion 230b in FIG. 3A) that is greater than a first display area (e.g., the first portion 230a in FIG. 3A) exposed to the outside.

According to an embodiment, the drive motor 260 and electronic components (e.g., the first substrate 251 and the battery B) disposed in the first housing 210 are moved together in response to the slide-in/slide-out operation of the first housing 210. Therefore, electrical connection members may be minimized compared to a disposition structure in which the corresponding constituent elements are disposed in the second housing 220 and connected to the first substrate 251 through electrical connection members (e.g., FPCB or FRC), thereby improving the operational reliability of the electronic device 200 and helping to design an efficient disposition of the electronic components.

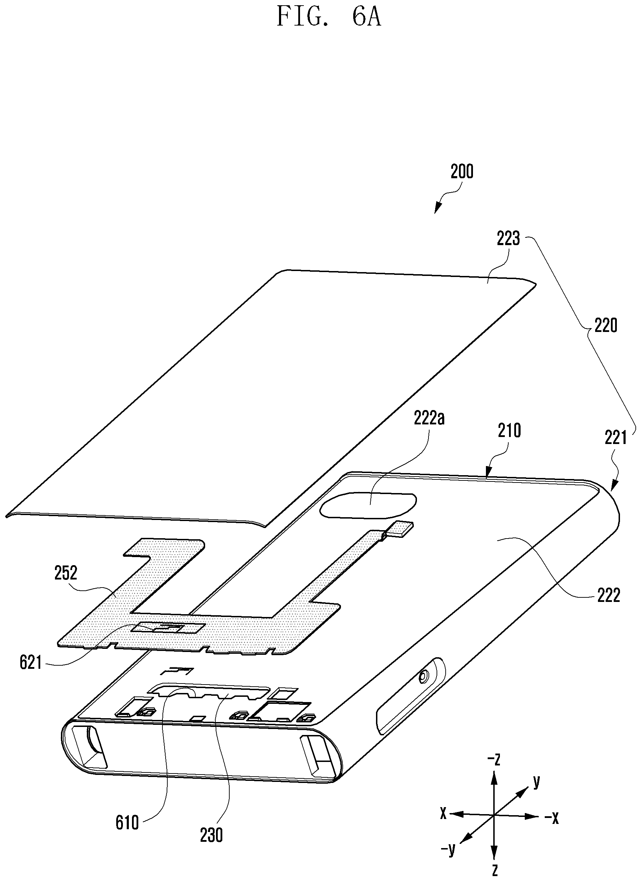

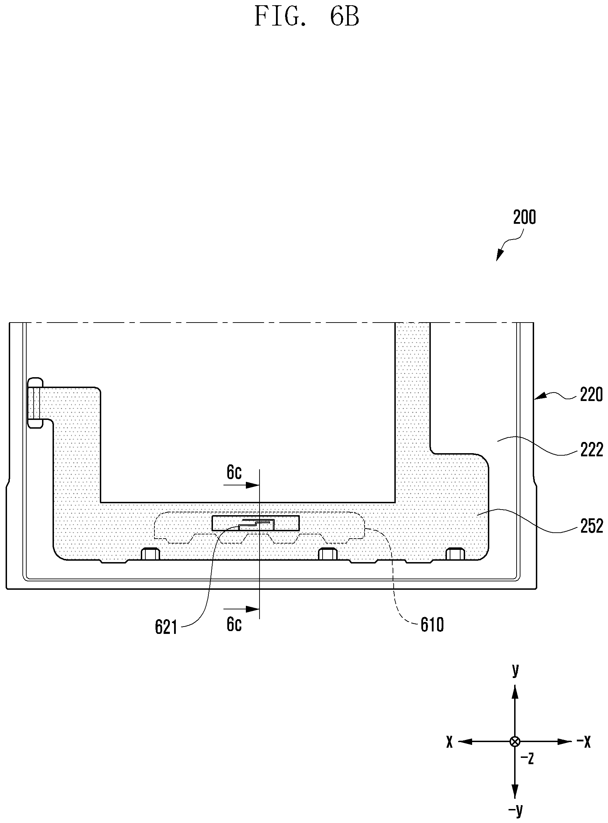

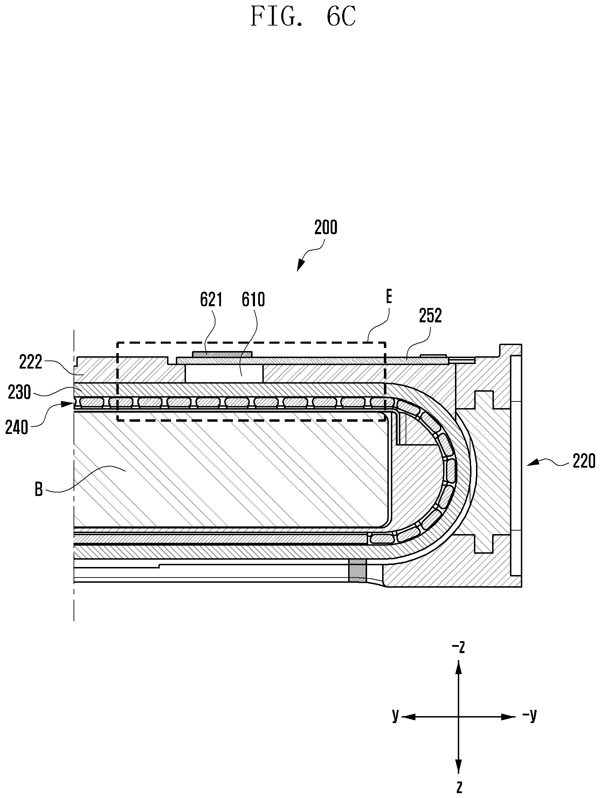

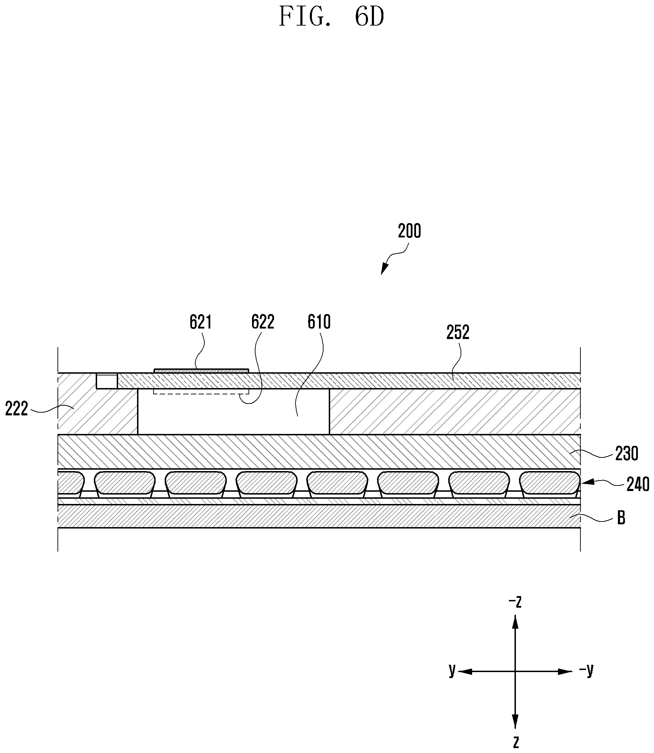

FIG. 6A is an exploded perspective view schematically illustrating a portion of an electronic device according to various embodiments of the present invention. FIG. 6B is a view schematically illustrating a state in which a second housing and a second substrate are coupled in the electronic device in FIG. 6A, according to various embodiments of the present invention. FIG. 6C is a schematic cross-sectional view viewed along line 6c-6c in the electronic device in FIG. 6B, according to various embodiments of the present invention. FIG. 6D is an enlarged view schematically illustrating an embodiment of an E portion of the electronic device in FIG. 6C, according to various embodiments of the present invention.

According to an embodiment, the electronic device 200 disclosed below may include the embodiments described in the electronic device 101 in FIG. 1 and/or the electronic device 200 in FIGS. 2A to 5B. According to various embodiments, the embodiments related to the electronic device 200 disclosed below may be integrated and applied to the embodiments described in the electronic device 101 in FIG. 1 and/or the electronic device 200 in FIGS. 2A to 5B. In the following descriptions, the constituent elements that are substantially identical to those in the embodiments disclosed in FIGS. 1 to 5B are assigned the same reference numerals, and redundant descriptions thereof may be omitted.

According to an embodiment, the embodiments related to the electronic device 200 according to the present disclosure are described using a rollable type of electronic device or a sliding type of electronic device as an example, but the present invention is not limited thereto and may also be applied to an electronic device such as a bar type of electronic device, a foldable type including the flexible display 230 (e.g., an expandable display), a wearable type, or a tablet PC. In an embodiment, the electronic device 200 is described in an example in which the first housing 210 slides in a vertical direction (e.g., y-axis direction) relative to the second housing 220, but the present invention is not limited thereto and may be substantially and equivalently applied to embodiments in which the first housing 210 and the second housing 220 slide in a horizontal direction (e.g., x-axis direction and/or -y-axis direction).

With reference to FIGS. 6A to 6D, the electronic device 200 according to an embodiment of the present invention may include the first housing 210, the second housing 220, the flexible display 230, the second substrate 252, and/or a first antenna pattern 621.

According to an embodiment, the first housing 210 may be in a slide-in state (e.g., FIGS. 2A and 2B) by being at least partially received in the second space 2201 of the second housing 220. The first housing 210 may be slid out to the outside of the second housing 220 in a slide-out state (e.g., FIGS. 3A and 3B). The first housing 210 may include the first substrate 251 (e.g., a first printed circuit board (PCB)) disposed in the first space 2101. The first substrate 251 may include a wireless communication circuit (e.g., the wireless communication module 192 in FIG. 1).

According to an embodiment, the second housing 220 may include the second space 2201 and may be slidably coupled to the first housing 210. The second housing 220 may be at least partially formed of a conductive material (e.g., metal). A hole 610 may be formed on a first surface (e.g., -z-axis direction) of the second housing 220. For example, the hole 610 may include an opening or a slit. In an embodiment, the hole 610 may be partially formed on the first surface (e.g., -z-axis direction) of the second housing 220. The hole 610 may be formed adjacent to a lower portion of the second housing 220 (e.g., -y-axis direction). The opening 222a may be formed in a portion of the first surface of the second housing 220. In an embodiment, the interior of the hole 610 may be filled with air having substantially zero dielectric loss. In other embodiments, the interior of the hole 610 may be filled with a non-conductive resin 710 (e.g., polymer) having low permittivity and dielectric loss characteristics.

According to various embodiments, the second housing 220 may include the second lateral member 221 and the second rear surface cover 223 coupled to at least a portion of the second lateral member 221 (e.g., at least a portion of the second support member 222). In an embodiment, the hole 610 may be formed in a portion of the second housing 220 (e.g., the second support member 222).

According to an embodiment, the flexible display 230 is disposed to be supported by the first housing 210 and the second housing 220, and when the flexible display 230 is converted from a slide-in state to a slide-out state, a display area of the flexible display 230 may change at least partially in a first direction (e.g., y-axis direction). At least a portion of the flexible display 230 may be disposed not to be visible from the outside by being received into the internal space 2201 of the second housing 220, in a slide-in state, while being supported by the bendable member 240 (e.g., an articulated hinge module or multi-bar assembly). At least a portion of the flexible display 230 may be disposed to be visible from the outside, while being supported by the bendable member 240 that defines at least partially co-planar with the first housing 210 in a slide-out state.

According to various embodiments, at least a portion of the flexible display 230 may overlap the hole 610 formed in the second housing 220. At least a portion of the flexible display 230 may be spaced apart from and facing the second substrate 252 through the hole 610 formed in the second housing 220.

According to an embodiment, the second substrate 252 (e.g., a second printed circuit board (PCB)) may be disposed on a first surface (e.g., -z-axis direction) of the second housing 220. In an embodiment, the second substrate 252 may be disposed on the second support member 222 that is a portion of the second housing 220. The second substrate 252 may cover at least a portion of the hole 610 formed in the second housing 220. The second substrate 252 may be disposed in the -z-axis direction of the second housing 220 (e.g., the first surface or the second support member 222). In an embodiment, the second substrate 252 may be disposed such that the electronic device 200 faces a portion of the flexible display 230 in a slide-in state and does not face a portion of the flexible display 230 in a slide-out state. The second substrate 252 may be electrically connected to the first substrate 251 using at least one electrical connection member (e.g., FPCB or RFC). The second substrate 252 may transmit a wireless signal provided through a wireless communication circuit (e.g., the wireless communication module 192 in FIG. 1) disposed on the first substrate 251 to the first antenna pattern 621 (or a second antenna pattern 622 in FIG. 6D). In various embodiments, the wireless communication circuit (e.g., the wireless communication module 192 in FIG. 1) may be disposed on the second substrate 252 disposed in the second housing 220 and electrically connected to the first antenna pattern 621.

According to an embodiment, the first antenna pattern 621 may be disposed on a first surface (e.g., -z-axis direction) of the second substrate 252. For example, the first antenna pattern 621 may be formed in a direction in which the second rear surface cover 223 is disposed (e.g., -z-axis direction). For another example, the second antenna pattern 622 may be disposed on a second surface (e.g., z-axis direction) of the second substrate 252. The second antenna pattern 622 may be disposed in a direction in which the hole 610 is formed (e.g., z-axis direction). For another example, the first antenna pattern 621 may be disposed closer to the first surface than the second surface inside the second substrate 252. For another example, the second antenna pattern 622 may be disposed closer to the second surface than the first surface inside the second substrate 252.

According to various embodiments, at least one of the first antenna pattern 621 or the second antenna pattern 622 may be formed on the second substrate 252. The first antenna pattern 621 and/or the second antenna pattern 622 may include a PCB embedded antenna. In an embodiment, the first antenna pattern 621 and the second antenna pattern 622 may be formed in a structure in which a conductive plate is linear and/or bent. The first antenna pattern 621 and/or the second antenna pattern 622 disposed on the second substrate 252 may be electrically connected to a wireless communication circuit (e.g., the wireless communication module 192 in FIG. 1) disposed on the first substrate 251 and/or the second substrate 252, and may operate as an antenna. In various embodiments, the first antenna pattern 621 and/or the second antenna pattern 622 may be mounted on the second substrate 252 in an embedded manner.

According to various embodiments, the first antenna pattern 621 may be disposed spaced apart from a portion of the second housing 220 that partially includes a conductive material and a portion of the flexible display 230 through the hole 610 formed in the second housing 220 (e.g., the second support member 222), which may reduce an effect on radiation performance.

According to an embodiment, the second rear surface cover 223 may cover and protect the second substrate 252 and the first antenna pattern 621.

In an embodiment, FIG. 6B may illustrate a state in which the second rear surface cover 223 is omitted from the electronic device 200 disclosed in FIG. 6A, and the second housing 220 (e.g., the second support member 222) and the second substrate 252 are coupled. With reference to FIG. 6B, the size of the hole 610 formed in the second support member 222, which is a portion of the second housing 220, may be greater or wider than the size of the first antenna pattern 621. In other embodiments, the size of the hole 610 may be substantially identical to or less than the size of the first antenna pattern 621, provided that the designated radiation performance of the first antenna pattern 621 may be secured or maintained.

In an embodiment, FIG. 6C may illustrate a cross-section cut along line 6c-6c in the electronic device 200 disclosed in FIG. 6B, viewed in the x-axis direction, and FIG. 6D may illustrate an enlarged schematic view of an E portion of the electronic device 200 disclosed in FIG. 6C.

With reference to FIGS. 6C and 6D, the electronic device 200 may have reduced degradation of radiation performance because the first antenna pattern 621 formed on the first surface (e.g., -z-axis direction) of the second substrate 252 is spaced apart from a portion of the second housing 220 (e.g., a portion of the second support member 222) and a portion of the flexible display 230. In an embodiment, the second antenna pattern 622 formed on the second surface (e.g., z-axis direction) of the second substrate 252 may be positioned to overlap the hole 610 when viewed in the -z-axis direction. For example, the second antenna pattern 622 may face the hole 610. The second antenna pattern 622 may face a portion of the flexible display 230 through the hole 610. When viewed in the -z-axis direction, the first antenna pattern 621 and the second antenna pattern 622 may overlap a portion of the flexible display 230, with the hole 610 formed in the second housing 220 (e.g., the first surface) interposed therebetween. In various embodiments, the first antenna pattern 621 may be disposed on the first surface (e.g., -z-axis direction) of the second substrate 252, and the second antenna pattern 622 may not be disposed on the second surface (e.g., z-axis direction) of the second substrate 252. In some embodiments, the first antenna pattern 621 may not be disposed on the first surface (e.g., -z-axis direction) of the second substrate 252, and the second antenna pattern 622 may be disposed on the second surface (e.g., z-axis direction) of the second substrate 252.

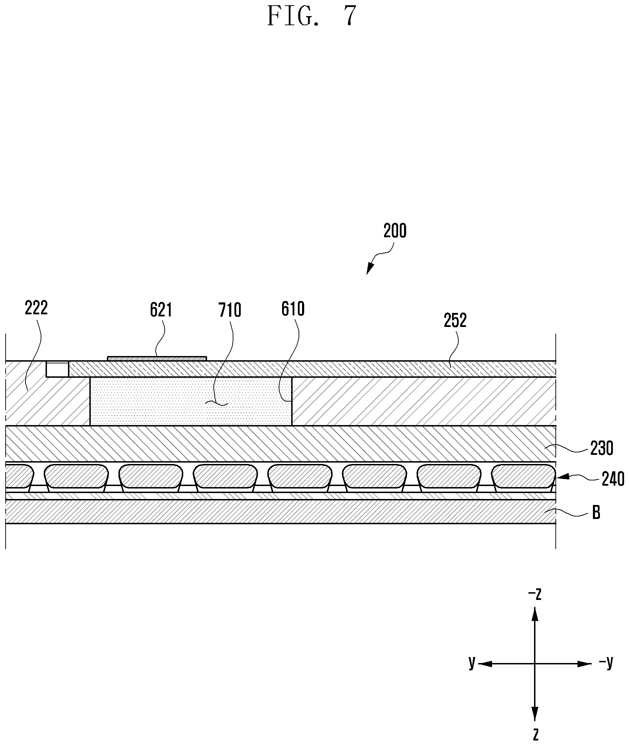

FIG. 7 is an enlarged view schematically illustrating another embodiment of the E portion of the electronic device disclosed in FIG. 6C, according to various embodiments of the present invention.

With reference to FIG. 7, the electronic device 200 may have the interior of the hole 610 formed in a portion of the second housing 220 (e.g., a portion of the second support member 222) filled with a non-conductive resin 710. The non-conductive resin 710 may include a polymer with low permittivity and dielectric loss characteristics, for radiation performance of the first antenna pattern 621 and/or the second antenna pattern 622. The non-conductive resin 710 may be disposed spaced apart from the flexible display 230.

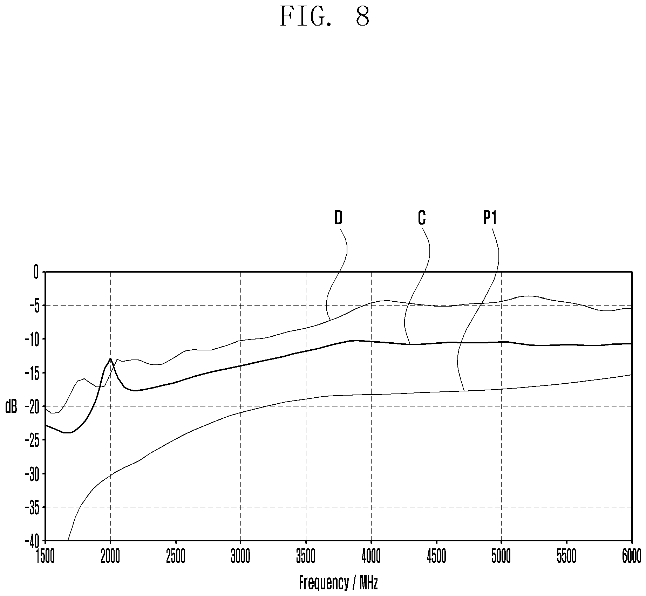

FIG. 8 is a view illustrating radiation efficiency for a first antenna pattern of an electronic device according to various embodiments of the present invention, and for an antenna pattern of an electronic device according to a comparative embodiment.

With reference to FIG. 8, the graph marked P1 may represent the radiation efficiency of the first antenna pattern 621 when the hole 610 is not formed in the second housing 220 (e.g., the first surface) and the first antenna pattern 621 and the second housing 220, at least a portion of which is formed of a conductive material, are disposed adjacent to each other, according to a comparative embodiment. The graph marked C may represent the radiation efficiency of the first antenna pattern 621 when the hole 610 is formed in a portion of the second housing 220, and the hole 610 is filled with the non-conductive resin 710. The graph marked D may represent the radiation efficiency of the first antenna pattern 621 when the hole 610 is formed in a portion of the second housing 220, and the hole 610 is filled with air.

In an embodiment, it can be seen that the radiation efficiency C of the first antenna pattern 621 of the electronic device 200 according to various embodiments of the present disclosure when the hole 610 is formed in a portion of the second housing 220, and the hole 610 is filled with the non-conductive resin 710, or the radiation efficiency D of the first antenna pattern 621 of the electronic device 200 according to various embodiments of the present disclosure when the hole 610 is formed in a portion of the second housing 220, and the hole 610 is filled with air, may be higher, for example, in a frequency band of about 1500 MHz to 6000 MHz, compared to the radiation efficiency P1 of the electronic device according to a comparative embodiment in which the hole 610 is not formed in the second housing 220 (e.g., the first surface) and the first antenna pattern 621 and the second housing 220, at least a portion of which is formed of a conductive material, are disposed adjacent to each other.

In another embodiment, it can be seen that the radiation efficiency D of the first antenna pattern 621 when the hole 610 is formed in a portion of the second housing 220 and the hole 610 is filled with air is higher, for example, in a frequency band from about 1500 MHz to 6000 MHz, compared to the radiation efficiency C of the first antenna pattern 621 when the hole 610 is formed in a portion of the second housing 220 and the hole 610 is filled with the non-conductive resin 710.

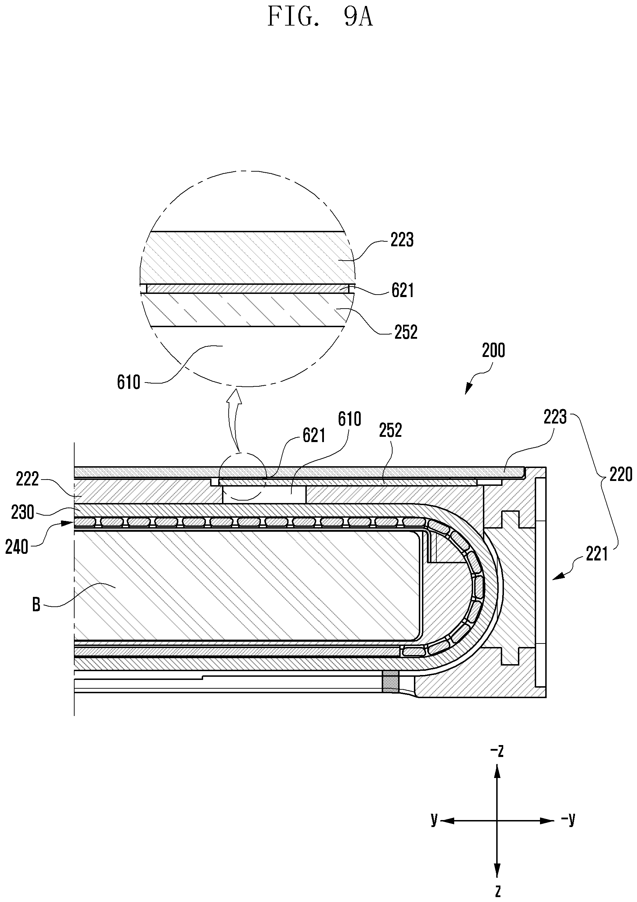

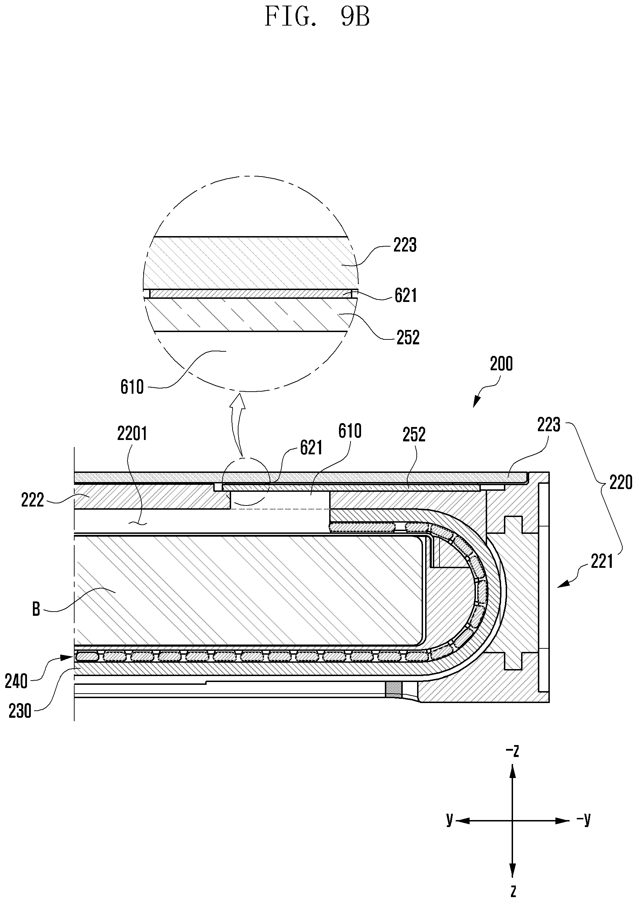

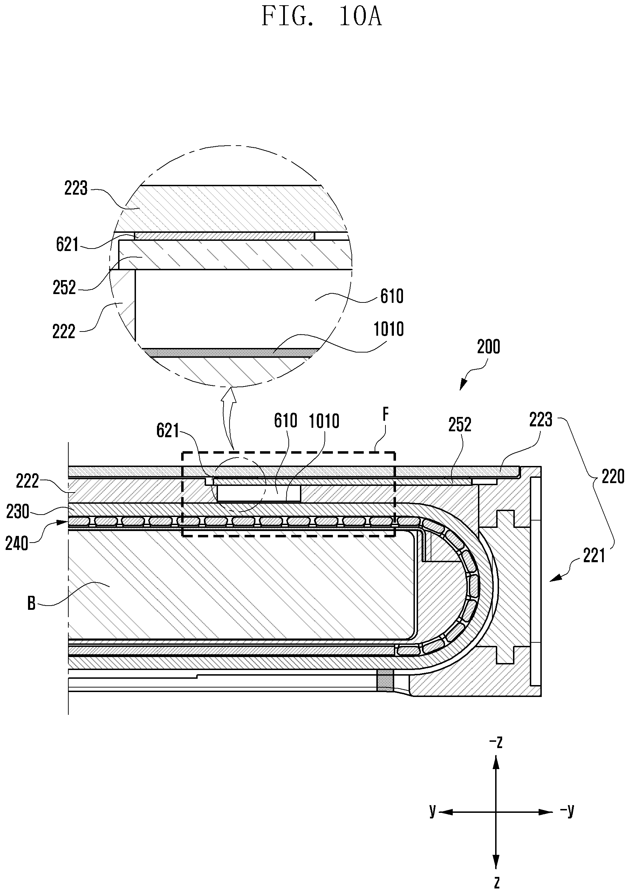

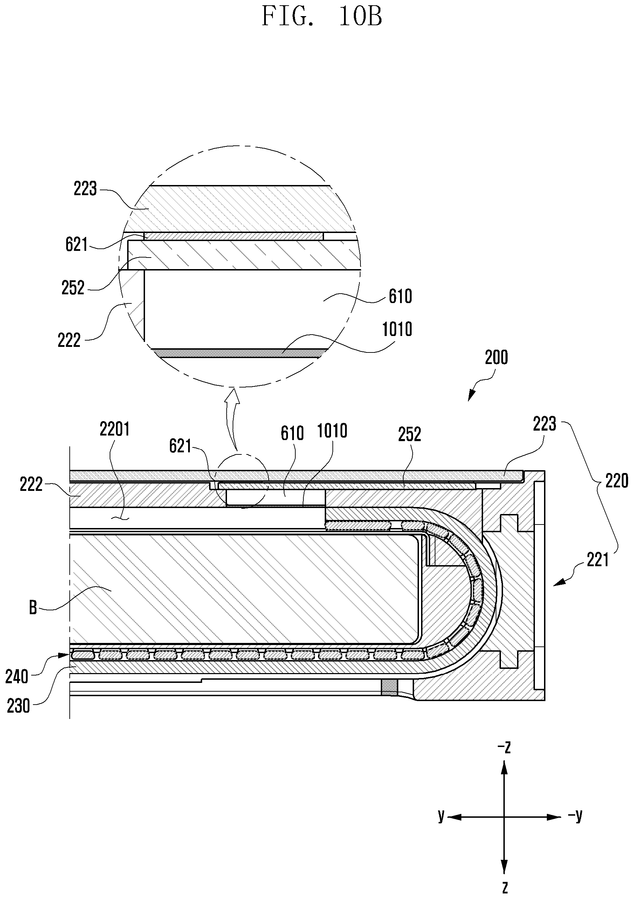

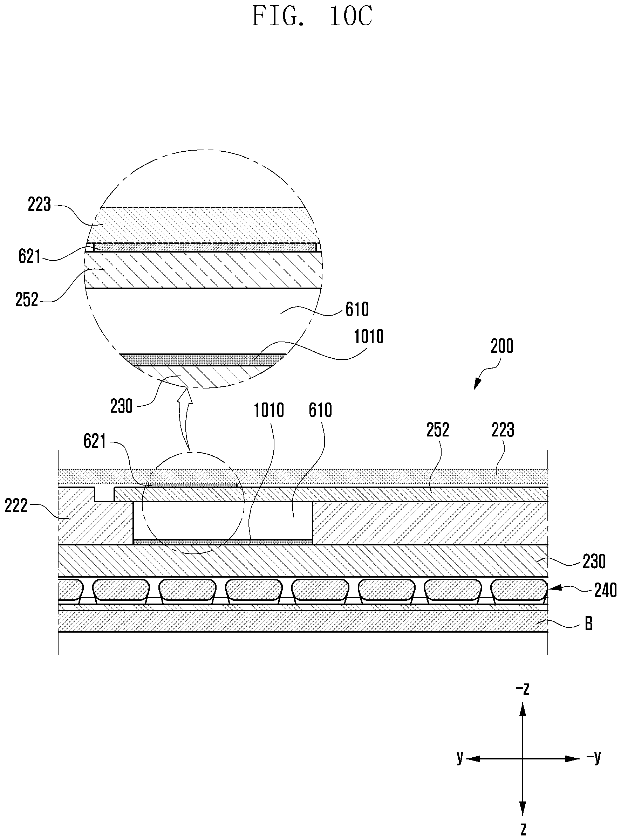

FIG. 9A is a schematic cross-sectional view of an embodiment viewed along line 6c-6c when the electronic device in FIG. 6B is in a slide-in state, according to various embodiments of the present invention. FIG. 9B is a schematic cross-sectional view of an embodiment viewed along line 6c-6c when the electronic device in FIG. 6B is in a slide-out state, according to various embodiments of the present invention. FIG. 10A is a schematic cross-sectional view of various embodiments viewed along line 6c-6c when the electronic device in FIG. 6B is in a slide-in state, according to various embodiments of the present invention. FIG. 10B is a schematic cross-sectional view of various embodiments viewed along line 6c-6c when the electronic device in FIG. 6B is in a slide-out state, according to various embodiments of the present invention. FIG. 10C is an enlarged view schematically illustrating various embodiments of an F portion of the electronic device in FIG. 10A, according to various embodiments of the present invention.

According to various embodiments, FIGS. 9A to 10C may be cross-sectional views schematically depicting a state in which the second housing 220 (e.g., the second rear surface cover 223) and the second substrate 252 are coupled in the electronic device 200 disclosed in FIG. 6A.

With reference to FIG. 9A, when the electronic device 200 is in a slide-in state, the first antenna pattern 621 may overlap a portion of the flexible display 230 positioned in the second space 2201 inside the second housing 220 with the hole 610 formed in the second housing 220 (e.g., the second support member 222) interposed therebetween. For example, when the electronic device 200 is in a slide-in state, the first antenna pattern 621 may be adjacent to a portion of the flexible display 230 with the hole 610 interposed therebetween, since the flexible display 230 is received in the second space 2201 of the second housing 220.

With reference to FIG. 9B, when the electronic device 200 is in a slide-out state, the first antenna pattern 621 may not overlap a portion of the flexible display 230 positioned in the second space 2201 inside the second housing 220 with the hole 610 formed in the second housing 220 (e.g., the second support member 222) interposed therebetween. For example, when the electronic device 200 is in a slide-out state, the first antenna pattern 621 may be space apart from a portion of the flexible display 230 with the hole 610 interposed therebetween, since the flexible display 230 is slid out from the second space 2201 of the second housing 220 to the outside. In an embodiment, when the electronic device 200 is in a slide-out state, the hole 610 and the second space 2201 may form an empty space to each other.

According to an embodiment, a case in which the first antenna pattern 621 and a portion of the flexible display 230 are adjacent in a spaced apart state through the hole 610 formed in a portion of the second housing 220 (e.g., a portion of the second support member 222) when the electronic device 200 is in a slide-in state, and the first antenna pattern 621 and a portion of the flexible display 230 are spaced apart through the hole 610 formed in a portion of the second housing 220 when the electronic device 200 is in a slide-out state, may has an improved radiation efficiency, for example, compared to an electronic device in which the hole 610 is not formed in a portion of the second housing 220 (e.g., a portion of the second support member 222) and the first antenna pattern 621 is disposed adjacent to the portion of the second housing 220 and the flexible display 230.

According to various embodiments, a case in which the first antenna pattern 621 is adjacent to a portion of the flexible display 230 with the hole 610 formed in a portion of the second housing 220 interposed therebetween when the electronic device 200 is in the slide-in state, may have a changed return loss, resulting in a deviation in radiation performance, compared to a case in which the first antenna pattern 621 is spaced apart from the portion of the flexible display 230 through the hole 610 formed in the portion of the second housing 220 when the electronic device 200 is in a slide-out state.

With reference to FIGS. 10A to 10C, the electronic device 200 may have a shielding member 1010 disposed in the hole 610 formed in a portion of the second housing 220 to reduce a deviation in radiation performance of the first antenna pattern 621 when the electronic device 200 is in a slide-in state or a slide-out state. For example, the shielding member 1010 may include a conductive thin film. When the electronic device 200 is in a slide-in state, the shielding member 1010 may reduce or block electrical components (e.g., a parasitic resonance) generated from a portion of the flexible display 230 from being transmitted to the first antenna pattern 621 through the hole 610. The shielding member 1010 may be positioned at a lower portion of the hole 610 (e.g., z-axis direction) and disposed spaced apart from a portion of the flexible display 230 that faces the hole 610.

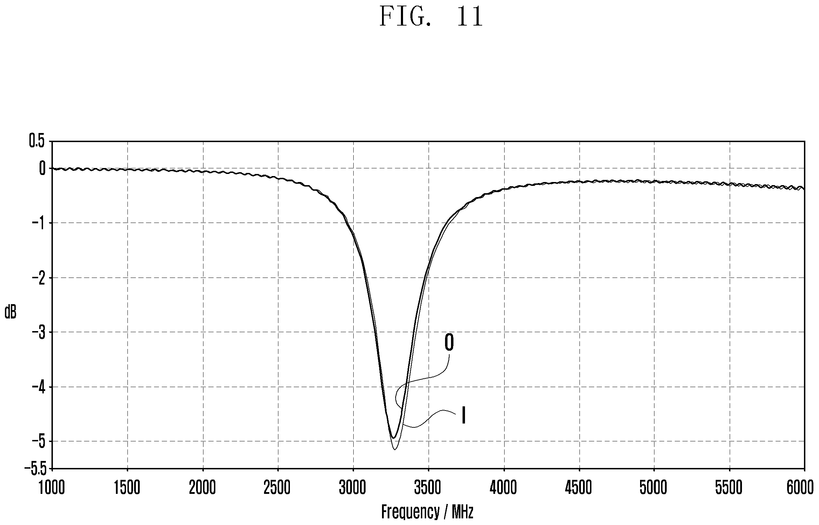

FIG. 11 is a view illustrating return loss when the electronic device in FIG. 10A is in a slide-in state and when the electronic device in FIG. 10B is in a slide-out state, according to various embodiments of the present invention.

According to an embodiment, when the shielding member 1010 is disposed in the hole 610 formed in a portion of the second housing 220 (e.g., a portion of the second support member 222), the deviation in radiation performance of the first antenna pattern 621 may be reduced regardless of when the electronic device 200 is in a slide-in state and when the electronic device 200 is in a slide-out state.

With reference to FIG. 11, it can be seen that the return loss I of the first antenna pattern 621 when the electronic device 200 is in a slide-in state exhibits substantially the same behavior, without deviation, compared to the return loss O of the first antenna pattern 621 when the electronic device 200 is in a slide-out state. In an embodiment, it can be seen that when the shielding member 1010 is disposed in the hole 610 formed in a portion of the second housing 220, the return loss I of the first antenna pattern 621 when the electronic device 200 is in a slide-in state and the return loss O when the electronic device 200 is in a slide-out state are satisfied, for example, with a reflection coefficient of about -5 dB in a band of about 1000 MHz to 6000 MHz.

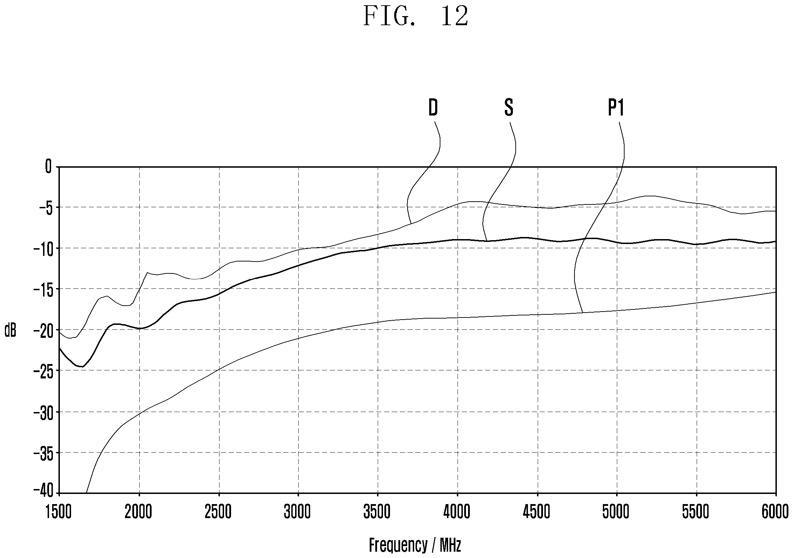

FIG. 12 is a view illustrating radiation efficiency for a first antenna pattern when a hole formed in a second housing of an electronic device according to various embodiments of the present invention is filled with air, when a shielding member is disposed in a hole, and for an antenna pattern of an electronic device according to a comparative embodiment.

With reference to FIG. 12, the graph marked P1 may represent the radiation efficiency of the first antenna pattern 621 when the hole 610 is not formed in a portion of the second housing 220 (e.g., a portion of the second support member 222) and the first antenna pattern 621 and the second housing 220, at least a portion of which is formed of a conductive material, are disposed adjacent to each other, according to a comparative embodiment. The graph marked S may represent the radiation efficiency of the first antenna pattern 621 when the shielding member 1010 is disposed in the hole 610 formed in a portion of the second housing 220. The graph marked D may represent the radiation efficiency of the first antenna pattern 621 when the hole 610 is formed in a portion of the second housing 220, and the hole 610 is filled with air.

In an embodiment, it can be seen that the radiation efficiency S of the first antenna pattern 621 of the electronic device 200 according to various embodiments of the present disclosure when the hole 610 is formed in a portion of the second housing 220, and the shielding member 1010 is disposed in the hole 610, or the radiation efficiency D of the first antenna pattern 621 of the electronic device 200 according to various embodiments of the present disclosure when the hole 610 is formed in a portion of the second housing 220, and the hole 610 is filled with air, may be improved, for example, in a frequency band of about 1500 MHz to 6000 MHz, compared to the radiation efficiency P1 of the electronic device according to a comparative embodiment in which the hole 610 is not formed in a portion of the second housing 220 and the first antenna pattern 621 and the second housing 220, at least a portion of which is formed of a conductive material, are disposed adjacent to each other.

In another embodiment, it can be seen that the radiation efficiency D of the first antenna pattern 621 when the hole 610 is formed in a portion of the second housing 220 and the hole 610 is filled with air is higher, for example, in a frequency band from about 1500 MHz to 6000 MHz, compared to the radiation efficiency S of the first antenna pattern 621 when the hole 610 is formed in a portion of the second housing 220 and the shielding member 1010 is disposed in the hole 610.

The electronic device 200, according to various embodiments of the present invention, may improve the radiation performance of the first antenna pattern 621 by forming the hole 610 in a portion of the second housing 220 disposed between the first antenna pattern 621 disposed on the second substrate 252 and a portion of the flexible display 230, and by ensuring a spacing distance between the first antenna pattern 621 and a portion of the flexible display 230.

An electronic device 101 or 200 according to an embodiment of the present invention may include: a first housing 210 including a first space 2101; a second housing 220 slidably coupled to the first housing and including a second space 2201; a flexible display 230 disposed to be supported by the first housing and the second housing, and having a display area that partially changes when the flexible display is converted from a slide-in state to a slide-out state; a first substrate 251 disposed in the first space of the first housing; a second substrate 252 disposed on a first surface of the second housing and including a first antenna pattern 621; a wireless communication circuit (e.g., the wireless communication module 192 in FIG. 1) disposed on one of the first substrate 251 or the second substrate 252 and electrically connected to the first antenna pattern 621; and a hole 610 formed in a portion of the second housing. The first antenna pattern 621 may be disposed to overlap the hole 610.

According to an embodiment, the electronic device may be configured such that an interior of the hole 610 is filled with air.

According to an embodiment, the electronic device may be configured such that a non-conductive resin 710 is disposed in an interior of the hole 610.

According to an embodiment, the non-conductive resin may be made of a material having low permittivity and dielectric loss characteristics.

According to an embodiment, the second substrate may be configured to cover at least a portion of the hole.

According to an embodiment, the first antenna pattern may be configured to be disposed on a first surface of the second substrate, and the second antenna pattern 622 may be configured to be disposed on a second surface of the second substrate.

The second antenna pattern may be disposed to face the hole and to face a portion of the flexible display.

According to an embodiment, the electronic device may further include a second rear surface cover 223, and the second substrate may be disposed between the first housing and the second rear surface cover.

According to an embodiment, the first substrate and the second substrate may be electrically connected using at least one electrical connection member (e.g., FPCB or FRC).

According to an embodiment, the first antenna pattern may include a printed circuit board (PCB) embedded antenna.

According to an embodiment, a size of the hole may be formed greater or wider than a size of the first antenna pattern.

According to an embodiment, the second substrate may be disposed to face a portion of the flexible display through the hole in a state in which the first housing is slid into the second space of the second housing.

According to an embodiment, the second substrate may be disposed not to face a portion of the flexible display through the hole in a state in which the first housing is slid out from the second space of the second housing.

According to an embodiment, a shielding member 1010 may be disposed in the hole 610.

According to an embodiment, the shielding member may be disposed to reduce or block an electrical component generated from a portion of the flexible display from being transmitted to the first antenna pattern through the hole.

An electronic device 101 or 200 according to an embodiment of the present invention may include: a first housing 210 including a first space 2101; a second housing 220 slidably coupled to the first housing and including a second space 2202; a flexible display 230 disposed to be supported by the first housing and the second housing, and having a display area that partially changes when the flexible display is converted from a slide-in state to a slide-out state; a first substrate 251 disposed in the first space of the first housing; a second substrate 252 disposed on a first surface of the second housing and including a first antenna pattern 621; a wireless communication circuit (e.g., the wireless communication module 192 in FIG. 1) disposed on one of the first substrate 251 or the second substrate 252 and electrically connected to the first antenna pattern 621; and a hole 610 formed in a portion of the second housing. The second substrate 252 may be disposed to face a portion of the flexible display 230 through the hole 610 in a state in which the first housing 210 is slid into the second space of the second housing 220, and not to face a portion of the flexible display 230 through the hole 610 in a state in which the first housing 210 is slid out from the second space of the second housing 620.

While the present invention has been described above with reference to various embodiments of the present invention, it is apparent that the alterations and modifications may be made by those skilled in the art without departing from the technical spirit of the present invention and belong to the present invention.

## Claims

1. An electronic device comprising:
a first housing including a first space;
a second housing slidably coupled to the first housing and including a second space;
a flexible display disposed to be supported by the first housing and the second housing, and having a display area that partially changes when the flexible display is converted from a slide-in state to a slide-out state;
a first substrate disposed in the first space of the first housing;
a second substrate disposed on a first surface of the second housing and including a first antenna pattern;
a wireless communication circuit disposed on one of the first substrate or the second substrate and electrically connected to the first antenna pattern; and
a hole formed in a portion of the second housing,
wherein the first antenna pattern is disposed to overlap the hole.

2. The electronic device of claim 1, wherein air is filled in an interior of the hole.

3. The electronic device of claim 1, wherein a non-conductive resin is disposed in an interior of the hole.

4. The electronic device of claim 3, wherein the non-conductive resin is made of a material having low permittivity and dielectric loss characteristics.

5. The electronic device of claim 1, wherein the second substrate covers at least a portion of the hole.

6. The electronic device of claim 1, wherein the first antenna pattern is disposed on a first surface of the second substrate, and a second antenna pattern is disposed on a second surface of the second substrate.

7. The electronic device of claim 6, wherein the second antenna pattern is disposed to face the hole and to face a portion of the flexible display.

8. The electronic device of claim 1, further comprising:
a second rear surface cover,
wherein the second substrate is disposed between the first housing and the second rear surface cover.

9. The electronic device of claim 1, wherein the first substrate and the second substrate are electrically connected using at least one electrical connection member.

10. The electronic device of claim 1, wherein the first antenna pattern is a printed circuit board (PCB) embedded antenna.

11. The electronic device of claim 1, wherein a size of the hole is formed greater or wider than a size of the first antenna pattern.

12. The electronic device of claim 1, wherein the second substrate is disposed to face a portion of the flexible display through the hole in a state in which the first housing is slid into the second space of the second housing.

13. The electronic device of claim 1, wherein the second substrate is disposed not to face a portion of the flexible display through the hole in a state in which the first housing is slid out from the second space of the second housing.

14. The electronic device of claim 1, wherein a shielding member is disposed in the hole.

15. The electronic device of claim 14, wherein the shielding member is disposed to reduce or block an electrical component generated from a portion of the flexible display from being transmitted to the first antenna pattern through the hole.
